# DEMANDE DE BREVET EUROPEEN

(11) **EP 1 351 198 A2**
(43) Date de publication de la demande: **08.10.2003**
(21) Numéro de dépôt: 03290677.8
(22) Date de dépôt: 18.03.2003
(51) Int. Cl.: G07D 7/00, G07F 7/08

(54) **Documents de sécurité à double code variable**

(30) Priorité: 18.03.2002 FR 0203310
(71) Demandeur: BANQUE DE FRANCE, F-75001 Paris (FR)
(72) Inventeur: Perron, Maurice, 78220 Viroflay (FR); Beauchet, Frédéric, 63110 Beaumont (FR); Charles, Jean-Louis, 63830 Durtol (FR)
(74) Mandataire: Le Forestier, Eric

(57) **Abrégé**

L'invention concerne un document de sécurité auquel une première et une deuxième informations sont associées, les deux informations étant elles-mêmes liées par un code, caractérisé en ce que des moyens sont prévus pour modifier le code et la deuxième information.

L'invention concerne également un procédé d'authentification d'un document qui comprend les étapes suivantes :
- Lecture de la première et de la deuxième information,
- Détermination de la version du code devant être mise en oeuvre pour lier les première et deuxième informations,
- Vérification de la correspondance entre les première et deuxième informations.

L'invention concerne enfin une machine d'authentification d'un document qui comprend des moyens de lecture des première et deuxième informations, et des moyens d'écriture de la deuxième information.

## Description

La présente invention concerne de manière générale la fabrication de documents de sécurité.

Plus précisément, l'invention concerne un document de sécurité auquel une première et une deuxième informations sont associées, les deux informations étant elles-mêmes liées par un code.

Et l'invention concerne également un procédé d'authentification d'un tel document, ainsi qu'une machine d'authentification associée.

On connaît déjà des procédés et documents du type mentionné ci-dessus.

La demande française FR 99 13936 au nom du déposant enseigne par exemple un document de sécurité tel qu'un billet de banque, auquel on associe deux informations dont une est visible à l'oeil nu sur le document, les deux informations étant liées par un algorithme de codage (algorithme que l'on nommera de manière générale « code » dans la suite de ce texte).

Si la première information d'un tel document est visible, la deuxième information (qui est obtenue par codage de la première information par un code déterminé) est imperceptible à un observateur.

Le code lui-même entre les deux informations est fixe. Il est mis en oeuvre non seulement initialement pour élaborer la deuxième information à partir de la première information en vue de fabriquer le document, mais également lors de la vérification du document par des machines, pour vérifier la correspondance entre les deux informations en vue d'authentifier le document.

Un tel procédé permet ainsi d'augmenter le niveau de sécurité associé au document.

De manière générale, on connaît de nombreux enseignements de moyens de sécurisation/authentification, mettant en oeuvre deux informations.

On peut ainsi citer à titre d'exemple le document GB 2 252 270, qui concerne une carte sécurisée du type carte de téléphone ou carte de crédit.

Une telle carte comporte deux informations 12, 14 liée entre elles par une correspondance vérifiable.

Ce document mentionne en outre la possibilité de mettre en oeuvre des versions différentes de la correspondance entre les deux informations (par exemple par lot de cartes).

Les deux informations associées à une carte sont fixes et ne peuvent être modifiées (on remarquera que ce document mentionne - page 14 - la possibilité de modifier une valeur 612, mais cette valeur ne correspond pas à une des deux informations liées par une correspondance qui sont à la base de la sécurisation de la carte).

On peut également citer enfin le document US 3 833 795 qui porte sur le contrôle d'authenticité d'objets portant un numéro séquentiel.

De tels objets sont associés à deux informations :
- Un numéro 12 séquentiel identifiant l'objet,
- Un numéro 13 servant de numéro de contrôle.

Ce document enseigne la possibilité de mettre à jour les numéros de contrôle 13 - typiquement lors de l'authentification de l'objet.

On remarquera que dans le cas de ce document les deux numéros 12, 13 ne sont pas liés par une correspondance ou un code.

Au contraire, il est précisé dans ce document qu'aucune corrélation entre les numéros 12 et 13 n'est établie, et qu'un contrefacteur ne pourrait associer à un numéro séquentiel 12 donné le bon numéro de contrôle 13 que par le fait du hasard (voir par exemple colonne 2 lignes 28 à 39 de ce document).

Les documents cités ci-dessus sont des exemples de mesures augmentant la sécurité d'un objet tel qu'un document de sécurité.

Le but de l'invention est d'augmenter encore ce niveau de sécurité.

Afin d'atteindre ce but, l'invention propose selon un premier aspect un document de sécurité auquel une première et une deuxième informations sont associées, les deux informations étant elles-mêmes liées par un code, caractérisé en ce que des moyens sont prévus pour modifier le code et la deuxième information.

Des aspects préférés, mais non limitatifs du document selon l'invention sont les suivants :
- Lesdits moyens de modification mettent en oeuvre un circuit intégré qui est implanté dans le document,
- la puce est constituée directement sur une partie du document,
- la deuxième information est mémorisée dans la puce,
- le code est mémorisé dans une mémoire système qui est accessible par une machine d'authentification du document,
- le code est mémorisé dans la puce,
- la puce est accessible en lecture et en écriture par une machine d'authentification,
- un indicateur permettant d'identifier une version du code est associé au document,
- la première information est imperceptible à un observateur,
- la première information est associée au document par une technique de type technique papetière ou plastique, et la deuxième information par une technique de type différent,
- la deuxième information est associée au document par une technique de type technique informatique.

Selon un deuxième aspect, l'invention propose également un procédé d'authentification d'un document selon l'une des revendications précédentes, caractérisé en ce que le procédé comprend les étapes suivantes :
- lecture de la première et de la deuxième information,
- détermination de la version du code devant être mise en oeuvre pour lier les première et deuxième informations,
- vérification de la correspondance entre les première et deuxième informations.

Des aspects préférés, mais non limitatifs du procédé selon l'invention sont les suivants :
■ le procédé comprend également la mise à jour du code et de la deuxième information,
■ ladite mise à jour du code se fait par consultation d'une table de correspondance entre les versions de code et les valeurs d'un indicateur,
■ ledit indicateur est mémorisé en association avec les documents à authentifier.
■ l'indicateur est représentatif du nombre de lectures d'authentification subies par le document,
■ ledit indicateur est représentatif d'une information temporelle depuis origine temporelle déterminée,
■ la mise à jour se fait en fonction de la valeur de l'indicateur,
■ ladite mise à jour du code se fait de manière aléatoire.

Enfin, l'invention propose selon un troisième aspect une machine d'authentification d'un document selon l'un des aspects ci-dessus et/ou selon un procédé d'authentification selon l'un des aspects ci-dessus, caractérisée en ce que la machine comprend des moyens de lecture des première et deuxième informations, et des moyens d'écriture de la deuxième information.

Des aspects préférés, mais non limitatifs du procédé selon l'invention sont les suivants :
- la machine est reliée à :
   - des moyens de calcul permettant de calculer, à partir de la première information et du code, une information codée,
   - des moyens de comparaison, pour vérifier que l'information codée calculée à partir de la première information et du code correspond bien à la deuxième information qui a par ailleurs été lue par la machine.
- la machine est apte à consulter une table listant des versions de code,
- la table est une table de correspondances entre des versions de code et des valeurs d'un indicateur,
- l'indicateur est associé individuellement à chaque document,
- la machine est apte à modifier l'indicateur de chaque document, lors de son authentification.

D'autres aspects, buts et avantages de l'invention apparaîtront mieux à la lecture de la description suivante d'une forme de réalisation de l'invention, donnée à titre d'exemple non limitatif.

Le point de départ de cette description est ainsi un document de sécurité tel qu'un billet de banque, auquel on associe deux informations liées par un code.

Le document peut être à trame fibreuse du type papier, ou être un document en plastique (par exemple un document multicouche comprenant plusieurs couches de plastique laminées ensemble).

Dans un mode préféré (mais non limitatif) de réalisation de l'invention, un circuit intégré est physiquement associé au document. Le circuit intégré peut en particulier être intégré au document. Ce circuit intégré est typiquement réalisé sous la forme d'une puce, et on le nommera « puce » dans la suite de ce texte.

La puce permet l'enregistrement d'informations, ainsi que l'accès en lecture et en écriture à ces informations.

Il est ainsi possible comme on va le voir de modifier les informations enregistrées dans la puce, lors de la vie du document.

La puce peut notamment être réalisée à partir d'un polymère organique semiconducteur, ou à partir d'un substrat de silicium classique.

Et dans un mode particulier, qui va être décrit ci-dessous à titre d'illustration, le document est réalisé à partir d'un support laminé multicouches qui comporte plusieurs couches de matériau plastique.

A cet égard, on pourra par exemple reproduire les enseignements du document US 5 698 333.

Ce document enseigne en particulier une structure multicouche comprenant deux couches qui comportent chacune au moins 50 % de polyéthylène de haute densité (densité supérieure à une valeur d'environ 0,94), ainsi qu'une résine adhésive de laminage entre ces deux couches.

La résine est de préférence sélectionnée dans le groupe composé du polyéthylène basse densité (LDPE selon l'acronyme anglo-saxon de Low Density Polyethylene) et du polyéthylène à basse densité linéaire (LLDPE selon l'acronyme anglo-saxon de Linear Low Density Polyethylene).

On précise que dans la structure multicouche divulguée par US 5 698 333 et qui peut être reprise dans la présente invention, les deux couches de polyéthylène sont orientées de sorte à ce qu'une direction principale d'orientation de chacune de ces couches soit alignée.

Il est également possible de réaliser une telle structure multicouche en recouvrant les deux faces d'une couche centrale de polyéthylène par deux couches respectives de protection, réalisées par exemple en polyester ou en polypropylène.

On précise cependant qu'il est également possible de mettre en oeuvre l'invention pour réaliser des documents à partir d'une trame fibreuse de type papier.

En tout état de cause (document à base plastique, ou fibreuse), on peut réaliser la puce directement sur le document à sécuriser, au lieu d'intégrer une puce préfabriquée (par exemple en silicium) dans le document comme cela est connu.

Pour réaliser de la sorte la puce directement sur le document, plusieurs techniques sont envisageables.

Selon une technique préférée, on imprime une partie du document par impression directe par jet de gouttelettes d'encre à base de solution aqueuse de polymères conducteurs.

Afin de garantir que cette solution aqueuse se répartisse de manière désirée sur le document, on a dans ce cas préalablement constitué sur la partie du document devant recevoir l'impression des régions hydrophiles et des régions hydrophobes, par dépôt sélectif d'un revêtement hydrophobe.

Cette disposition permet de définir préalablement sur la partie du document à imprimer le motif conducteur qui sera celui de la puce.

L'étape d'impression directe par jet permet ainsi d'obtenir sur la partie choisie du document un motif conducteur qui définit la puce.

On précise que le revêtement hydrophobe servant à définir ce motif peut être du téflon®.

Il est également possible de définir les régions hydrophiles et hydrophobes par assemblage de couches de revêtement, chaque couche portant un motif définit par revêtement sélectif d'une matière hydrophile et/ou hydrophobe.

On précise que les polymères conducteurs utilisés pour constituer l'encre à base de solution aqueuse peuvent être du type F8T2 et/ou PEDOT/IPPSS.

En tout état de cause, de tels polymères conducteurs permettent de réaliser des transistors, et les liaisons électriques entre ces transistors.

Dans le cas où on superpose des couches portant un motif comme mentionné ci-dessus, l'assemblage des couches entre elles peut être réalisé avec un liant élastomère déposé entre chaque couche.

En variante, il est également possible de constituer la puce par transfert (à chaud ou à froid) d'un motif conducteur, ledit motif étant toujours réalisé à base de matériaux organiques du type polymères conducteurs.

On précise que pour réaliser les connexions entre les éléments de la puce, il est possible de dissoudre localement et sélectivement le matériau dit électrique de certaines couches d'une structure multicouche qui définit et comporte les différents composants du circuit intégré.

En tout état de cause, on constitue la puce directement sur une partie du document à sécuriser.

Dans le cas où le document est fabriqué sur la base d'un support plastique multicouche, on élaborera de préférence la puce sur une couche centrale, puis on assemble par laminage cette couche centrale avec deux couches superficielles de protection disposées de part et d'autre de la couche centrale.

Comme mentionné ci-dessus, la couche centrale peut être en polyéthylène, et les couches de protection peuvent être en polyester ou en polypropylène.

Quel que soit le mode de mise en oeuvre de l'invention (document plastique ou à trame fibreuse, puce classique - par exemple puce à substrat de silicium - intégrée au document ou bien constitution directement sur une partie du document de la puce - par exemple puce à base de polymère, et en particulier dans ce cas par impression directe, ...) on a constitué un document dans lequel on a implanté une puce.

Et comme on l'a dit, la puce peut être remplacée par d'autres moyens permettant d'enregistrer des informations, puis de les lire et de les modifier par machine.

On va maintenant décrire les dispositions permettant de sécuriser le document, lors de sa fabrication.

Une première information est associée au document, par tout moyen connu en soi.

Cette première information est individuellement associée au document. L'invention est en effet typiquement mise en oeuvre pour des lots ou des gammes de documents de sécurité, chaque document de sécurité étant associé à une « première information » différente respective.

La première information peut ainsi être associée directement au document, par exemple par impression d'une encre (visible et/ou ayant des propriétés lisibles par machine, telles que des propriétés de luminescence, ou encore des propriétés magnétiques, électriques, etc...).

Cette première information peut également être portée par un élément intermédiaire tel qu'un fil, un filigrane, ou un support d'une autre nature, qui est intégré au document.

Cette première information peut être visible en lumière naturelle, ou de manière plus générale perceptible sans assistance à un observateur (cette perception pouvant se faire par la vision, et/ou par un autre sens : toucher, ...).

Elle peut également être imperceptible, et ne pouvoir être lue que par une machine munie de capteurs adaptés à la nature du moyen de marquage utilisé pour associer la première information au document (marquage magnétique, électrique, optique, tactile, etc.., ou marquage utilisant une combinaison de certaines de ces propriétés).

De manière générale, la première information est ainsi associée au document par une technique de type technique papetière ou plastique utilisée normalement pour les applications papetières ou plastiques, éventuellement fiduciaires.

Par « techniques papetières ou plastiques» on entend ici les techniques permettant de modifier une propriété du papier (ou du plastique) à partir duquel le document est constitué. Il peut ainsi s'agir de techniques modifiant :
- l'aspect du document (impression, ..), et/ou
- le relief du document (embossage, ..).

Et en tout état de cause, la première information est fixe, c'est à dire qu'elle est associée une fois pour toutes au document et ne peut être modifiée ensuite.

Et comme on va le voir, la deuxième information est dans le mode préféré de réalisation de l'invention associée au document par une technique de type informatique.

En tout état de cause, si la première information est associée au document par une technique de type papetière ou plastique, la deuxième information est associée au même document par une technique de type différent, à savoir une technique de type informatique.

Ceci est une caractéristique qui renforce déjà en soi la sécurité du document, du fait qu'il est difficile pour des contrefacteurs potentiels de maîtriser simultanément ces différents types de techniques.

Et comme on va le voir, quelque soit le mode de réalisation de l'invention, la deuxième information peut être modifiée.

Dans un mode préféré de réalisation de l'invention, le document comporte ainsi comme décrit ci-dessus une puce, ladite puce comportant elle-même une mémoire, dans laquelle on a inscrit lors de la fabrication du document une deuxième information, qui correspond à une forme codée de la première information.

Par « forme codée de la première information », on entend que la deuxième information est le résultat d'un algorithme de codage - ou code comme on l'a dit ci-dessus - qui lie la première information et la deuxième information.

Il existe ainsi une correspondance, définie par le code, entre la première et la deuxième information.

Et cette mémoire peut être accédée par une machine en lecture pour lire la deuxième information et/ou le code, ainsi qu'en écriture, pour modifier la deuxième information, et éventuellement le code (dans le cas particulier qui sera décrit plus loin dans ce texte et qui concerne une configuration de l'invention dans laquelle le code est lui-même enregistré dans la puce - bien que dans un mode principal de réalisation de l'invention, ce code soit mémorisé séparément du document, dans une mémoire reliée aux machines d'authentification que l'on va décrire ci-dessous).

De la sorte, les documents fabriqués selon l'invention peuvent être authentifiés après leur fabrication et lors de leur « vie normale » par des machines adaptées à cet effet.

Ces machines comprennent des moyens de lecture, pour lire dans la mémoire de la puce la deuxième information et éventuellement le code (dans le cas particulier mentionné ci-dessus où ce code est enregistré dans la puce).

Cette lecture peut se faire par contact avec la puce (contact électrique en particulier), ou sans contact (par exemple par liaison hyperfréquence).

Ces machines comprennent également des moyens permettant de lire la première information associée au document.

Pour authentifier un document, une machine telle qu'évoquée ci-dessus va donc lire les première et deuxième informations, ainsi que le code lui-même dans le cas où ce code est mémorisé dans la puce.

La machine d'authentification est également reliée à :
- une mémoire, qui peut être dédiée spécifiquement à la machine (en lui étant par exemple physiquement intégrée), ou être une mémoire d'un serveur central auquel la machine peut être reliée par tout type de liaison connue en soi et permettant l'échange d'informations entre la machine et le serveur.
   De manière générique, ce type de mémoire sera désignée dans ce texte par le terme de « mémoire système » par opposition à la « mémoire document » qui est celle de la puce.
   Le système d'authentification des documents, qui comprend les machines d'authentification, peut ainsi comprendre une ou plusieurs mémoires système, qui sont accessibles par les machines d'authentification (chaque mémoire système pouvant être une mémoire d'un serveur auquel toutes les machines ont accès, ou une mémoire individuelle de la machine - dans ce cas les mémoires système des différentes machines sont mises à jour simultanément),
- des moyens de calcul permettant de calculer, à partir de la première information et du code, une information codée,
- des moyens de comparaison, pour vérifier que l'information codée calculée à partir de la première information et du code correspond bien à la deuxième information qui a par ailleurs été lue par la machine dans la puce.

Chacun de ces moyens peut être intégré directement dans la machine.

Dans le mode principal de réalisation de l'invention dans lequel le code n'est pas enregistré dans la puce, ce code est alors enregistré dans la mémoire système, de sorte que la machine peut utiliser ce code.

Dans ce cas, lors de l'authentification la machine lit dans un premier temps la première et la deuxième information du document à authentifier.

A partir de la première information et du code, les moyens de calcul de la machine élaborent une information codée.

Les moyens de comparaison de la machine vérifient ensuite que cette information codée correspond bien à la deuxième information lue du document, ce qui indique que le document est authentique.

Si le code est enregistré dans la puce, la machine lit ce code en même temps que la deuxième information et exécute également la vérification décrite ci-dessus.

Dans tous les cas, il est prévu des dispositions pour faire évoluer le code et pour modifier la deuxième information enregistrée dans le document en codant avec un nouveau code la première information.

Dans le mode principal de réalisation de l'invention, le code est comme on l'a dit enregistré dans la mémoire système.

Lors de la fabrication du document, la deuxième information est codée avec un code initial, qui est donc enregistré dans la mémoire système.

Et des moyens sont prévus pour permettre aux machines d'authentification de modifier le code utilisé pour élaborer la deuxième information du document authentifié, et pour mettre à jour dans la mémoire de la puce de ce document la deuxième information.

De préférence cette mise à jour se fait en fonction de l'état d'un indicateur qui est associé au document (ou à un groupe de documents, dans le cas décrit ci-dessous où l'indicateur est mémorisé dans une mémoire système).

Cet indicateur peut être par exemple un compteur mémorisé dans la puce du document, et incrémenté d'une unité par la machine d'authentification à chaque authentification.

Dans ce cas, les machines d'authentification disposent de moyens pour réaliser cette incrémentation du compteur dans la puce des documents qu'elles authentifient.

Et on définit alors pour les compteurs des documents des valeurs qui permettront de déclencher la mise à jour du code et de la deuxième information.

En effet, lors de l'authentification d'un document, si la lecture par machine du compteur révèle que ledit compteur a atteint une telle valeur de déclenchement, la machine ne se contente pas d'authentifier le document sur la base de la lecture de la première information et de la deuxième information qui est enregistrée dans la puce.

La machine va en outre mettre à jour la deuxième information dans la mémoire de la puce.

Pour ce faire, la machine est reliée à une table de correspondance d'une mémoire système, ladite table mémorisant la version du code à utiliser en fonction de la valeur du compteur du document.

La table mémorise également les valeurs de déclenchement du compteur.

Et lors de la lecture du compteur du document, la machine consultera la table pour savoir si le compteur du document a atteint une valeur de déclenchement.

Si ce n'est pas le cas, la machine ne réalise que l'authentification du document, en vérifiant que la deuxième information lue correspond bien au codage de la première information, avec la bonne version du code.

La « bonne version du code » est celle qui correspond dans la table de correspondance à la valeur du compteur lue par la machine dans la mémoire de la puce du document.

Bien entendu, lors de cette authentification la machine incrément également la valeur du compteur du document.

Les valeurs de déclenchement peuvent être définies de manière quelconque désirée pour des documents donnés.

Il est par exemple possible de prévoir que pour tous les docume,nts la mise à jour du code et de la deuxième information se fera toutes les N lectures d'authentification par une machine, N étant un entier supérieur ou égal à un.

Ainsi, dans le cas particulier où N est égal à un, la mise à jour du code et de la deuxième information se fera après chaque lecture d'authentification par une machine. Ceci correspond à une variante de l'invention dans laquelle la sécurité est particulièrement renforcée.

On précise que dans le cas où la mise à jour ne se fait pas en fonction de l'état d'un indicateur tel qu'un compteur associé au document, cette mise à jour peut se faire de manière aléatoire, en déclenchant simultanément les machines d'un réseau de machines d'authentification (à partir d'une instruction d'une serveur central auquel les machines sont reliées, ou de mises à jour locales simultanées de ces machines).

Dans tous les cas de figures, il est possible de mettre à jour différents groupes de documents. On pourra ainsi typiquement prévoir des échéances (ou des valeurs de déclenchement dans le cas d'un indicateur associé au document) différentes, pour différentes gammes de billets de banque.

L'indicateur peut également être d'un autre type qu'un compteur du nombre d'authentifications subies par le document.

Il peut par exemple s'agir d'une horloge comptant les unités de temps écoulées depuis une origine temporelle déterminée.

Dans ce cas la puce du document mémorise également une horloge qui constitue l'indicateur.

Et dans une version simplifiée, l'horloge est l'horloge d'une mémoire système.

En fonction du nombre d'unités de temps indiqué par l'horloge au moment de l'authentification, la machine mettra à jour la deuxième information dans le document (et éventuellement le code correspondant), ou non.

L'origine temporelle correspond à un événement particulier lors duquel on a activé l'horloge par machine (mise en circulation du document, fabrication, ...).

L'ensemble des variantes décrites dans ce document est également applicable au mode de réalisation de l'invention selon lequel le code lui-même est enregistré dans la mémoire de la puce du document, au lieu d'être enregistré dans une mémoire système.

Dans ce cas, lors de la lecture d'authentification la machine lit le code, avec la première information et la deuxième information.

Revenant au mode principal où le code est enregistré dans une mémoire système, on mettra dans une version particulièrement préférée en oeuvre un indicateur mémorisé dans le document, tel que mentionné ci-dessus, avec une table de correspondance entre la version du code à mettre en oeuvre et la valeur de l'indicateur.

L'indicateur permet ainsi à la machine de sélectionner dans la mémoire système la version du code à laquelle doit correspondre le code employé pour relier les première et deuxième informations.

Dans ce cas en effet, seules la première et la deuxième informations sont lues par machine d'authentification lors de l'authentification - et il est nécessaire que la machine d'authentification dispose d'une donnée supplémentaire de validation de la correspondance entre les première et deuxième informations lues sur le document.

Cette donnée supplémentaire fournie par l'indicateur permet en effet à la machine d'authentification de consulter la table de correspondance pour:
- déterminer en fonction de la valeur de l'indicateur quelle est la version du code qui est censée être mise en oeuvre, et permettre ainsi d'authentifier le document, et
- mettre à jour la deuxième information si une valeur de déclenchement de l'indicateur a été atteinte.

Et les algorithmes correspondant aux différentes versions du code doivent alors être effectivement enregistrés dans la table de correspondance, ou à défaut des moyens doivent être prévus pour permettre à la machine d'authentification d'accéder à ces codes pour vérifier la correspondance entre première et deuxième information lues, et éventuellement pour mettre à jour la deuxième information du document.

On peut par exemple prévoir que la table contienne pour chaque version du code, un pointeur qui permet à la machine d'accéder - même à distance - au code lui-même.

Un intérêt de l'invention est d'augmenter le niveau de sécurité des documents.

En effet, même si un faussaire tente de falsifier des documents en reproduisant sur de faux documents une première et une deuxième information copiées d'un document, l'association entre première et deuxième information ne sera plus valable dès que l'indicateur aura dépassé une valeur de déclenchement et que le code aura été changé.

On pourra donc augmenter le nombre de valeurs de déclenchement, et rapprocher ces valeurs les unes des autres, pour augmenter la fréquence de modification du code.

Et comme on l'a dit, la première et la deuxième information sont associées au document en utilisant de préférence des techniques de type différent.

On précise enfin qu'il est possible de mettre l'invention en oeuvre de manière particulièrement simple, sans indicateur tel que mentionné ci-dessus.

Dans ce cas, la vérification de la version du code - et sa mise à jour éventuelle - se font toujours par consultation d'une table de correspondance par la machine, mais cette table ne comprend qu'une liste de codes (pouvant se réduire à un seul code).

Et pour authentifier le document la machine d'authentification va vérifier que le code employé pour constituer la deuxième information fait partie de cette liste.

A ces fins, il n'est pas obligatoire que le code lui-même soit mémorisé sur le document, ce code pouvant être calculé par la machine d'authentification à partir des première et deuxième informations.

Et il est ici encore possible de modifier la version du code, mais de manière « aveugle », en programmant les machines pour réaliser une mise à jour du code employé - et pour écrire dans la mémoire de la puce de chaque document authentifié une nouvelle deuxième information remplaçant l'ancienne, ladite nouvelle deuxième information ayant été codée avec le nouveau code - qui est lui-même alors enregistré dans la table listant les codes.

## Revendications

1. Document de sécurité auquel une première et une deuxième informations sont associées, les deux informations étant elles-mêmes liées par un code, **caractérisé en ce que** des moyens sont prévus pour modifier le code et la deuxième information.

2. Document de sécurité selon la revendication 1, **caractérisé en ce que** lesdits moyens de modification mettent en oeuvre un circuit intégré qui est implanté dans le document.

3. Document de sécurité selon la revendication précédente, **caractérisé en ce que** la puce est constituée directement sur une partie du document.

4. Document de sécurité selon l'une des deux revendications précédentes, **caractérisé en ce que** la deuxième information est mémorisée dans la puce.

5. Document de sécurité selon l'une des trois revendications précédentes, **caractérisé en ce que** le code est mémorisé dans une mémoire système qui est accessible par une machine d'authentification du document.

6. Document de sécurité selon l'une des revendications 2 à 4, **caractérisé en ce que** le code est mémorisé dans la puce.

7. Document de sécurité selon l'une des cinq revendications précédentes, **caractérisé en ce que** la puce est accessible en lecture et en écriture par une machine d'authentification.

8. Document de sécurité selon l'une des revendications précédentes, **caractérisé en ce qu'**un indicateur permettant d'identifier une version du code est associé au document.

9. Document de sécurité selon l'une des revendications précédentes, **caractérisé en ce que** la première information est imperceptible à un observateur.

10. Document de sécurité selon l'une des revendications précédentes, **caractérisé en ce que** la première information est associée au document par une technique de type technique papetière ou plastique, et la deuxième information par une technique de type différent.

11. Document de sécurité selon la revendication précédente, **caractérisé en ce que** la deuxième information est associée au document par une technique de type technique informatique.

12. Procédé d'authentification d'un document selon l'une des revendications précédentes, **caractérisé en ce que** le procédé comprend les étapes suivantes :
• Lecture de la première et de la deuxième information,
• Détermination de la version du code devant être mise en oeuvre pour lier les première et deuxième informations,
• Vérification de la correspondance entre les première et deuxième informations.

13. Procédé d'authentification d'un document selon la revendication précédente, **caractérisé en ce que** le procédé comprend également la mise à jour du code et de la deuxième information.

14. Procédé d'authentification d'un document selon la revendication précédente, **caractérisé en ce que** ladite mise à jour du code se fait par consultation d'une table de correspondance entre les versions de code et les valeurs d'un indicateur.

15. Procédé d'authentification d'un document selon la revendication précédente, **caractérisé en ce que** ledit indicateur est mémorisé en association avec les documents à authentifier.

16. Procédé d'authentification d'un document selon l'une des deux revendications précédentes, **caractérisé en ce que** ledit indicateur est représentatif du nombre de lectures d'authentification subies par le document.

17. Procédé d'authentification d'un document selon la revendication 14 ou 15, **caractérisé en ce que** ledit indicateur est représentatif d'une information temporelle depuis origine temporelle déterminée.

18. Procédé d'authentification d'un document selon l'une des cinq revendications précédentes, **caractérisé en ce que** la mise à jour se fait en fonction de la valeur de l'indicateur.

19. Procédé d'authentification d'un document selon la revendication 13, **caractérisé en ce que** ladite mise à jour du code se fait de manière aléatoire.

20. Machine d'authentification d'un document selon les revendications 1 à 11 selon un procédé d'authentification d'un document selon les revendications 12 à 19 **caractérisée en ce que** la machine comprend des moyens de lecture des première et deuxième informations, et des moyens d'écriture de la deuxième information.

21. Machine d'authentification d'un document selon la revendication précédente **caractérisée en ce que** la machine est reliée à :
a. des moyens de calcul permettant de calculer, à partir de la première information et du code, une information codée,
b. des moyens de comparaison, pour vérifier que l'information codée calculée à partir de la première information et du code correspond bien à la deuxième information qui a par ailleurs été lue par la machine.

22. Machine d'authentification d'un document selon l'une des deux revendications précédentes **caractérisée en ce que** la machine est apte à consulter une table listant des versions de code.

23. Machine d'authentification d'un document selon la revendication précédente **caractérisée en ce que** la table est une table de correspondances entre des versions de code et des valeurs d'un indicateur.

24. Machine d'authentification d'un document selon la revendication précédente, **caractérisée en ce que** l'indicateur est associé individuellement à chaque document.

25. Machine d'authentification d'un document selon la revendication précédente **caractérisée en ce que** la machine est apte à modifier l'indicateur de chaque document, lors de son authentification.
